(19) Europäisches Patentamt

European Patent Office

Office européen des brevets

(11) **EP 1 679 506 A2**

(12) **EUROPEAN PATENT APPLICATION**

(43) Date of publication:
**12.07.2006 Bulletin 2006/28**

(51) Int Cl.:
***G01N 27/00*** *(2006.01)*

(21) Application number: **06000109.6**

(22) Date of filing: **04.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.01.2005 JP 2005001050**

(71) Applicant: **Epson Toyocom Corporation**
**Saiwai-ku**
**Kawasaki-shi**
**Kanagawa 212-8513 (JP)**

(72) Inventor: **Sato, Tomio**
**Kamiina-gun**
**Nagano-ken 399-4696 (JP)**

(74) Representative: **HOFFMANN EITLE**
**Patent- und Rechtsanwälte**
**Arabellastrasse 4**
**81925 München (DE)**

(54) **SC cut crystal microbalance**

(57)     A SC cut crystal microbalance includes a SC cut crystal oscillator, a C mode/B mode switching-type oscillation circuit, a frequency counter, and a frequency information processing device, wherein the C mode/B mode switching-type oscillation circuit is switched by a signal received from the frequency information processing device, the frequencies of C mode and B mode is measured respectively, variations by temperature change are compensated from frequency variations of C mode based upon temperature information by the frequency change of B mode, and whereby mass change is measured.

## FIG. 1

REFERENCE FREQUENCY BY ATOMIC OSCILLATION

1  2  4

C-MODE/ B-MODE SWITCHING → FREQUENCY COUNTER → FREQUENCY INFORMATION PROCESSING DEVICE → MASS INFORMATION OUTPUT

→ TEMPERATURE INFORMATION OUTPUT

5  3

SWITCHING SIGNAL

**Description**

BACKGROUND

1. Technical Field

The present invention relates to a SC cut crystal microbalance and more particularly to the SC cut crystal microbalance improved so as to precisely measure deposited mass by compensating for a change in frequency produced due to the temperature.

2. Related Art

A crystal microbalance (Crystal Oscillator Microbalance, QCM), which detects very small quantity of mass by means of a change in frequency of a crystal oscillator, is used in several fields. When a change in mass, $\Delta m(g)$, occurs on an electrode membrane of a crystal oscillator such as an AT cut crystal oscillator by very thin and evenly plated membrane for the thickness of a crystal circuit, as is generally known, a change in the resonance frequency, $\Delta F(Hz)$, is given by:

$$\Delta F = -F_0{}^2 \Delta m / (K \cdot \rho \cdot A) \qquad (1)$$

Where, $F_0$ = Resonance Frequency, K = Frequency Constant, $\rho$ = Density of Crystal and A = Electrode Area.
As shown in Formula 1, the higher the sensitivity of mass detection is improved, the higher the frequency $F_0$ rises.
In addition, in order to substantially improve the detection sensitivity, the harmonic frequency oscillation (overtone oscillation) is used as disclosed in JP-A-4-369459. The relation between the resonance frequency $F_0$ and the thickness t of the overtone oscillator is given by:

$$F_0 = K / (t \cdot m) \qquad (2)$$

Where, $F_0$ = Frequency of Overtone Oscillator, K = Frequency Constant and m = Degree of Harmonic Frequency (m = 3, 5, 7, 9).
According to JP-A-4-369459, it is described that the detection sensitivity of the mass of 0.023 ng/cm²Hz could have been obtained, using the overtone oscillator of 180 MHz.
Besides, it is described that applying high molecules to the electrode of the overtone oscillator thinly and revealing the specific adsorptive property functions as a gas sensor.
Furthermore, in JP-A-2004-304766, the case that the crystal oscillator is used as a sensor of a mass measuring equipment in the atmosphere and the case that the crystal oscillator is used by immersing in the liquid are disclosed. Since the crystal impedance (CI) in immersing the crystal oscillator into the liquid 10 to 30 times larger than that in the atmosphere, oscillating becomes difficult. Besides, the phase change of the crystal oscillator is drastically changed f rom - 90 to +90 in the atmosphere, while that is changed from -90 to -50 in the liquid. Besides, it is described that it is difficult to oscillate by using an amplifier.
An oscillation circuit is generally constituted by an amplifier and a feedback circuit. When the gain of the amplifier indicates A and the feedback ratio of the feedback circuit does $\beta$, the power condition is given by:

$$Re(A\beta) \geq 1 \qquad (3),$$

and
the frequency condition is given by:

$$Im(A\beta) = 0 \qquad (4).$$

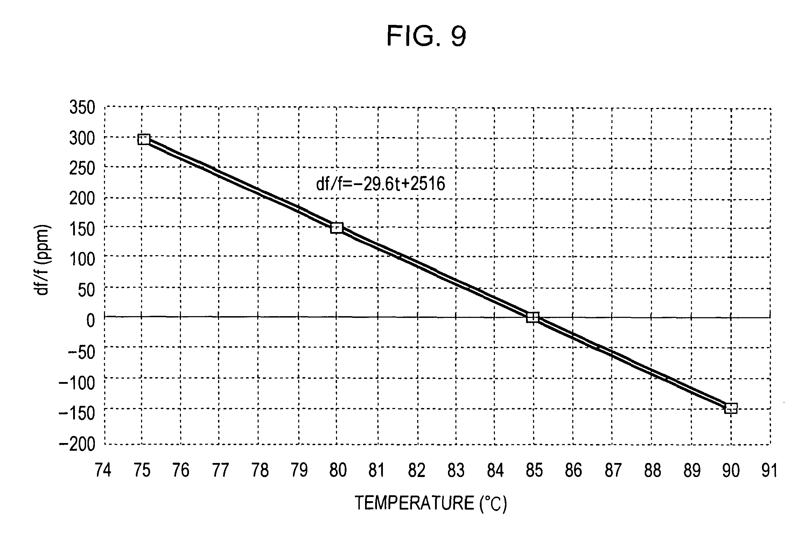

Therefore, when the Formulas 3 and 4 are satisfied, the oscillation of the oscillation circuit is continued. Here, Re$(A\beta)$ and Im$(A\beta)$ correspond to the real part and the imaginary part of the complex amount $A\beta$, respectively.
In JP-A-2004-304766, so as to satisfy the phase condition of an oscillation circuit, there is, in detail, described the oscillation circuit having a first phase circuit, a second phase circuit and two amplifying circuits. Accordingly, the crystal oscillator which is LBO ($Li_2B_4O_7$) oscillator is used as a piezoelectric oscillator. It is described that AT cut oscillator, BT cut oscillator, GT cut oscillator and the like are used as crystal oscillator, and simultaneously, SAW oscillator can be used.
As is generally known, a SC cut (Stress Compensated Cut) oscillator is the oscillator formed by grinding a crystal board cut out by rotating the crystal board on the Z-axis approximately 22 degrees and further on the X-axis approximately 34 degrees to a predetermined thickness, and by attaching electrodes to the surfaces of both axes as shown in Fig. 6. In addition, three oscillation modes such as C mode, B mode and a mode are oscillated as shown in Fig. 7. Of three modes, C mode constitutes the crystal oscillator. As shown in Fig. 8, since the inflection point of an AT cut crystal oscillator is approximately 27.5 degrees, while the inflection point of C mode is 95 degrees, being located on the high temperature side, the SC cut crystal oscillator is pertinent to a high stability crystal oscillator constituted by a temperature-controlled bath.
A SC cut crystal oscillator has an excellent thermal characteristic and a gravity sensitivity characteristic. In this case, the thermal shock characteristic of the SC cut crystal oscillator is different from that of an AT cut crystal oscillator by approximately 1/200, and the gravity sensitivity also is quite smaller than that of the AT cut crystal oscillator. Furthermore, since in the frequency temperature characteristic of B mode, the frequency deviation (df/f) is almost linearly changed (approximately -30 ppm/°C) for the change of temperature as shown in Fig. 9, the SC cut crystal oscillator may be used as a temperature sensor.

An oscillator of using a SC cut crystal oscillator is disclosed in JP-A-5-243892. By using that the SC cut crystal oscillator is connected to a dual mode oscillation circuit, C mode and B mode are oscillated, C mode is used as a main oscillation, and the temperature-frequency characteristic of B mode is in linear with the temperature, the temperature information is transferred to a compensation circuit and whereby, the crystal oscillator is configured. In JP-A-5-243892, the method for preventing the combination of B mode and other mode is disclosed so that the temperature-frequency characteristic is linear.

As recorded in JP-A-4-369459, a sensor part used for a conventional crystal microbalance was mainly constituted by an AT cut crystal oscillator pertinent to the high frequency in order to improve the detection sensitivity. However, there was the problem that, for example, in case a crystal microbalance is used as a film thickness monitor of a deposition apparatus, the temperature of the AT cut crystal oscillator, which is a sensor, is raised due to the attachment of the deposited materials, the frequency changes by the rise of temperature and the changes by the attachment of the deposited materials are added, the frequency changes by the thermal shock occur and the accuracy of the detection sensitivity is deteriorated. In JP-A-5-243892, there is disclosed the crystal oscillator which compensates for the frequency of C mode of the main oscillation by using B mode of the SC cut crystal oscillator as a temperature sensor, but there is not described the information which relates to using the SC cut crystal oscillator in the sensor part. Besides, in JP-A-2004-304766, a problem is that the possibility the SC cut crystal oscillator is used as a piezoelectric oscillator is represented, but no configuration method is displayed in detail except for displacing the AT cut crystal oscillator with the SC cut crystal oscillator.

SUMMARY

In order to improve the accuracy of a crystal microbalance, according to an aspect of the invention, a SC cut crystal microbalance includes: a SC cut crystal oscillator; a C mode/B mode switching-type oscillation circuit; a frequency counter; and a frequency information processing device, wherein the C mode/B mode switching-type oscillation circuit is switched by a signal received from the frequency information processing device, the frequencies of C mode and B mode is measured respectively, variations by temperature change are compensated from frequency variations of C mode based upon temperature information by the frequency change of B mode, and whereby mass change is measured.

According to another aspect of the invention, a SC cut crystal microbalance includes: a SC cut crystal oscillator; a C-mode/B-mode dual mode-type oscillation circuit; and a frequency counter and frequency information processing device, wherein the frequencies of C mode and B mode are measured by a signal received from the frequency information processing device respectively, variations by temperature change are compensated from frequency variations of C mode based upon temperature information by the frequency change of B mode, and whereby mass change is measured.

In the SC cut crystal microbalance, the C-mode/B-mode switching-type oscillation circuit is configured to take the output OUT through a capacitance C6 from a collector of Tr1, wherein a resistance R1 is connected between an emitter of a transistor and a ground; a serial connection circuit is connected between capacitances C3 C4; resistances R2 and R3 are connected between a power source Vcc and the collector of Tr1, and between the power source Vcc and a base of Tr1, respectively; a resistance R4 is connected between the base of the transistor Tr1 and the ground; a serial connection circuit is connected between capacitances C1 and C2; an inductance L1 is connected to a contact of the capacitances C1 and C2, and a contact of the capacitances C3 and C4; terminals on each side of capacitances C7 and C8 are connected to a contact of the capacitances C1 and C2; terminals on each side are connected each switch SW; terminal on a side is connected to a contact of the capacitances C3 and C4; and a serial connection circuit between the SC cut crystal oscillator and a variable capacitance C5 is connected to the base of Tr1 and the ground.

An advantage of some aspects of the invention is that the accuracy of the crystal microbalance can be, to a large extent, improved, since a SC cut microbalance requires a temperature change in the atmosphere to change the frequency of B mode and uses a SC cut crystal oscillator to compensate for the frequency change by the temperature change of C mode, so that the thermal shock resistance can be reduced by approximately 1/200, compared with that of the AT crystal oscillator.

BRIEF DESCRIPTION OF THE DRAWINGS

The invention will be described with reference to the accompanying drawings, wherein like numbers reference like elements.

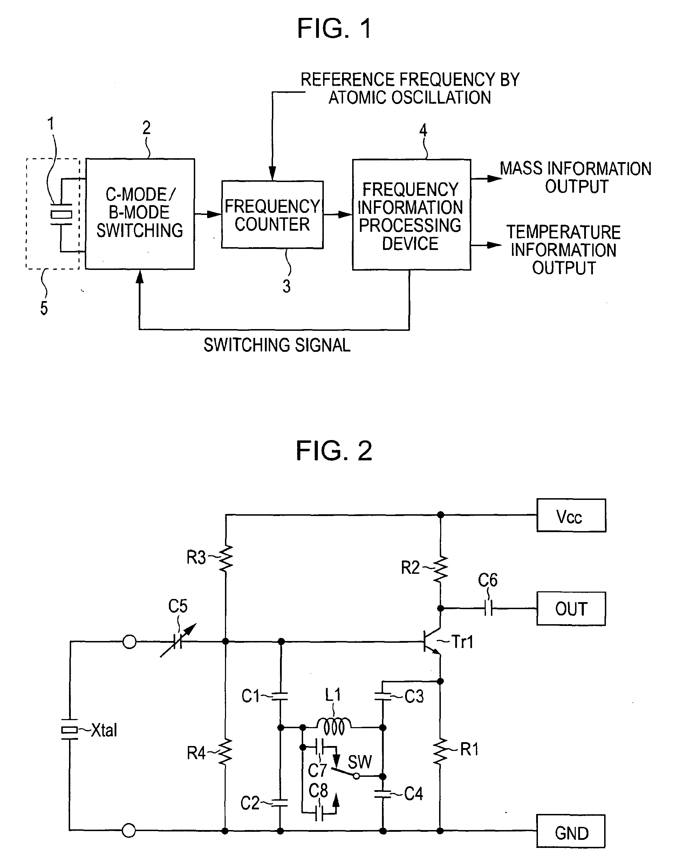

Fig. 1 is a block circuit diagram illustrating a configuration of a SC cut crystal microbalance according to a first embodiment of the invention.

Fig. 2 is a circuit view illustrating a configuration of C mode/B mode switching oscillation circuit.

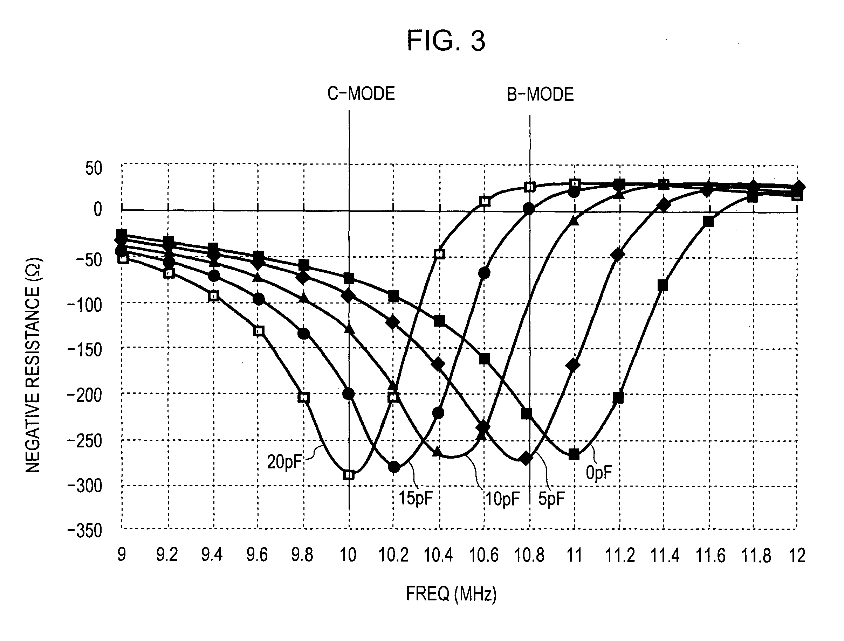

Fig. 3 illustrates a frequency-negative resistance characteristic in case of changing a capacity C7 in the oscillation circuit of Fig. 2.

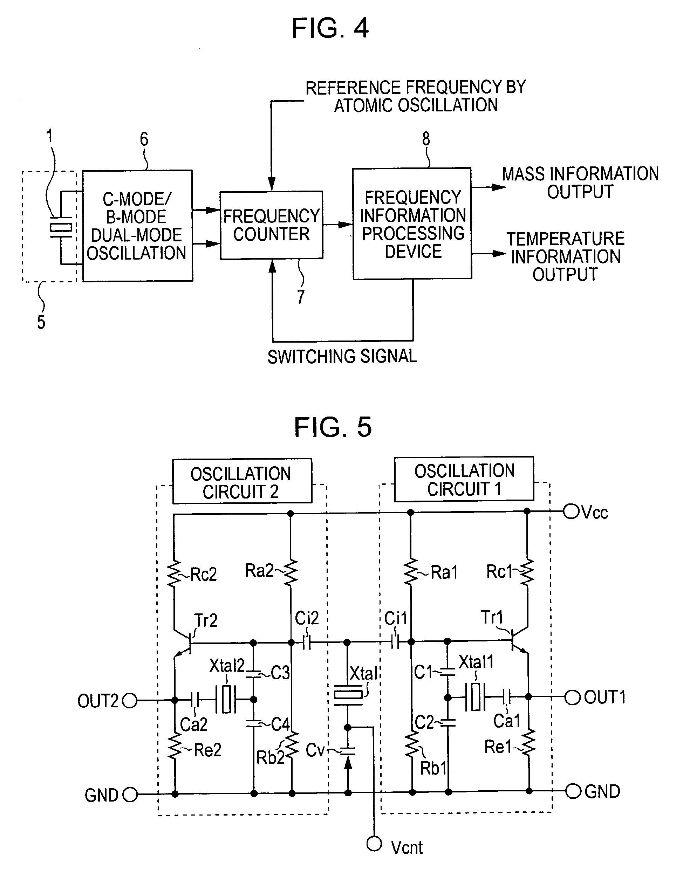

Fig. 4 is a block circuit diagram illustrating a configuration of a SC cut crystal microbalance according to a second embodiment of the invention.

Fig. 5 is a circuit view illustrating a configuration of C mode/B mode dual mode oscillation circuit.

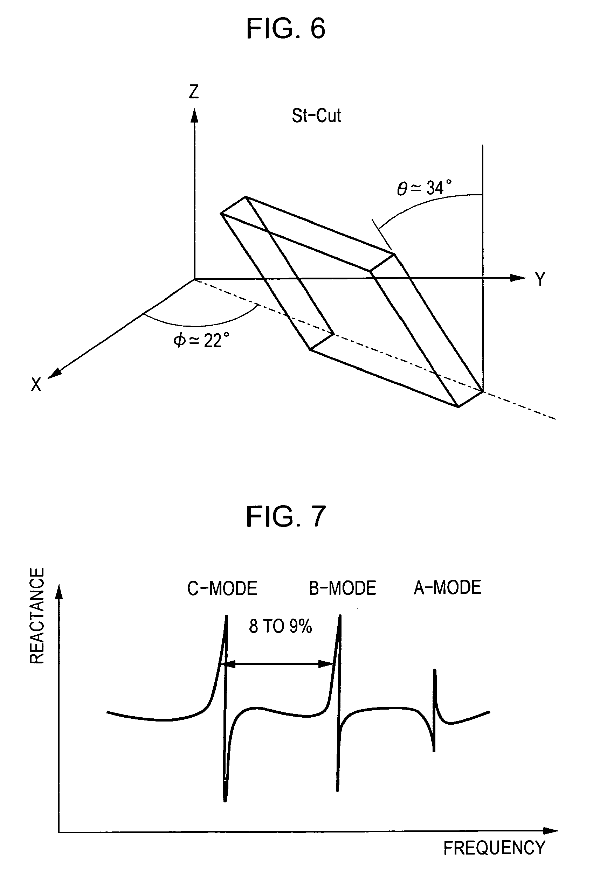

Fig. 6 is a schematic view illustrating a cutting orientation of a SC cut.

Fig. 7 is a schematic view illustrating reactance characteristics of three modes of a SC cut crystal oscillator such as C mode, B mode and A mode.

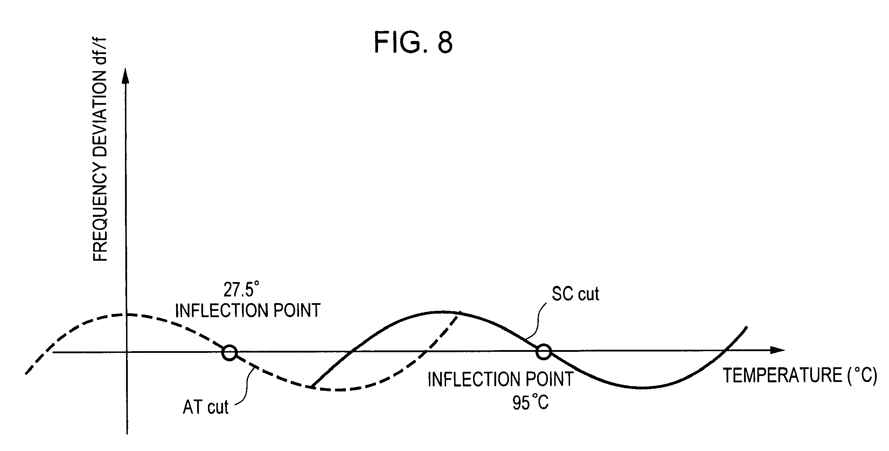

Fig. 8 is a view comparing a frequency-temperature characteristic of a SC cut crystal oscillator with that of an AT cut crystal oscillator.

Fig. 9 is a view illustrating a frequency-temperature of B mode.

DESCRIPTION OF EXEMPLARY EMBODIMENTS

Fig. 1 is a block circuit diagram illustrating an embodiment of a SC cut crystal microbalance according to the present invention, and includes a SC cut crystal oscillator 1, a C mode/B mode switching oscillation circuit 2, a frequency counter 3 and a frequency information processing device 4. The SC cut crystal oscillator 1 is configured by fixing a crystal board of which a electrode membrane is attached to the surfaces of both axes on a holder with an electrically conductive adhesive or a solder, etc. by grinding the crystal board cut out by rotating the crystal board on the Z-axis approximately 22 degrees and further on the X-axis approximately 34 degrees to a predetermined thickness. A lead wire generated from both electrode membranes is connected to an oscillation circuit 2 by inserting the electrode part of the SC cut crystal oscillator 1 into a measuring atmosphere 5. Since the oscillation circuit 2 has a switch which can be controlled by a control signal received from the outside, some modes such as C mode or B mode of the SC cut crystal oscillator 1 can be selectively oscillated by changing over the switch.

An output of an oscillation circuit 2 is converted to a digital signal by being connected to a frequency counter and is inputted to a frequency information processing device 4. The frequency information processing device 4 transmits a C mode/B mode switching signal to the oscillation circuit 2 at a predetermined time interval and oscillates the oscillation circuit into some modes such as C mode or B mode. The mass attached to the electrode membrane of the SC cut crystal oscillator can be measured by information processing the frequency change of C mode in the atmosphere 5. At that time, since the temperature of the atmosphere 5 can be precisely measured through the frequency information processing device considering the temperature-frequency deviation characteristic shows the linearity as shown in Fig. 9 by oscillating to B mode, the mass attached to the electrode membrane can be precisely measured by compensating the frequency variations by the temperature from the frequency variations of C mode based on the temperature. The information of attached mass and information in the atmosphere 5 measured is output from the frequency information processing device. Further, in order to improve the measurement accuracy, it is preferable to substitute the reference frequency included within a frequency counter 3 with the reference frequency by an external atomic oscillation. Besides, the frequency change by the thermal shock is, to a large extent, improved by approximately 1/200 or less, compared with that of the AT cut crystal oscillator.

Fig. 2 is a circuit view illustrating a second embodiment of C mode/B mode switching oscillation circuit 2. A resistance R1 is connected between an emitter of a transistor Tr1 and a ground (GND), and in addition, a serial connection circuit is connected between the emitter of Tr1 and GND. Resistances R2 and R3 are connected between a power source Vcc and the collector of Tr1, and between the power source Vcc and a base of Tr1, respectively, so an output OUT is taken through a capacitance C6. Furthermore, R1 is connected between a base of Tr1 and a ground, and in addition, a serial connection circuit of capacitances C1 and C2 is connected. A contact between the capacitances C1 and C2, and a contact between capacitances C3 and C4 is connected to a inductance L1. Besides, terminals on each side of capacitances C7 and C8 are connected to the contact of the capacitances C1 and C2, terminals on each side are connected to each switch SW. A terminal on a side of the switch SW is connected to the contact of the capacitances C3 and C4. A serial connection circuit between the SC cut crystal oscillator Xtal and a variable capacitance C5 is connected to the base of Tr1 and the ground, whereby a C mode/B mode switching-type oscillation circuit 2 is configured.

As an example of constant of the switching-type oscillation circuit as shown in Fig. 2, a transistor Tr1 is set as 2SC372, an inductance L1 as 2.2 $\mu$H, capacitances C1, C2, C3, C4, C5 and C6 as 47 pF, 75 pF, 150 pF, 180 pF, 5 pF - 20 pF and 1000 pF, and a capacitance C7 as parameter. Furthermore, resistances R1, R2, R3 and R4 are set as 330 $\Omega$, 220 $\Omega$, 10 k$\Omega$ and 10 k$\Omega$. A crystal oscillator Xtal is set as 10 MHz of a SC cut and a power source Vcc is set as 5 V.

Fig. 3 is a view illustrating the frequency (MHz) - negative resistance ($\Omega$) of an oscillation circuit as shown in Fig. 2, and the curve of the frequency (MHz) - negative resistance ($\Omega$) is shown when the switch SW is connected to a capacitance C7, whereby the values of the capacitance C7 are changed to 0 pF, 5 pF, 10 pF, 15 pF and 20 pF. The frequencies of C mode and B mode of a SC cut crystal oscillator are 10 MHz and 10.8 MHz, respectively.

When the capacitance C7 is set as 20 pF in Fig. 3, a negative resistance of the oscillation circuit in C mode (10 MHz) is approximately -300 $\Omega$ and that in B mode (10.8 MHz) is approximately +30 $\Omega$, whereby only C mode can be oscillated. Meanwhile, when the capacitance C7 is set as 5 pF, respectively, the negative resistance of the oscillation circuit in C mode (10 MHz) is approximately 90 Ω and that in B mode (10.8 MHz) is approximately -280 Ω, whereby only B mode can be oscillated. That is, when the capacitances C7 and C8 are set as 20 pF and 5 pF, a switch SW is switched to C7 or C8, whereby C mode and B mode can be selectively oscillated.

Fig. 4 is a block circuit diagram illustrating the configuration of a second embodiment according to the invention, and includes a SC cut crystal oscillator 1, a dual mode oscillation circuit 6 simultaneously oscillating C mode and B mode, a frequency counter 7 and a frequency information processing device 8. If a lead wire generated from the SC cut crystal oscillator 1 is connected to the dual mode oscillation circuit 6, C mode and B mode can be simultaneously oscillated. Since the output of the oscillation circuit 6 is connected to the frequency counter 7 and whereby it becomes a digital signal, the digital signals of C mode and B mode are inputted into the frequency information processing device 8 by a control signal of the frequency information processing device 8.

When a frequency change of C mode is information-processed in the atmosphere 5, the mass attached on the electrode membrane of a SC cut crystal oscillator 1 can be measured as described above, and in addition, the mass attached on the electrode membrane also can be precisely measured by measuring temperature changes of the atmosphere 5 from the frequency of B mode and compensating the frequency variations by the temperature from the frequency variations of C mode. The information of attached mass and temperature in the atmosphere 5 measured is output from a frequency information processing device 8. Further, in order to improve the measurement accuracy, it is preferable to substitute the reference frequency included within a frequency counter 3 with the reference frequency by an external atomic oscillation.

Fig. 5 is a circuit view illustrating a dual mode oscillation circuit as shown in Fig. 4, and shows a circuit illustrated in "Highly Stable and Low Phase-Noise Oven-Controlled Crystal Oscillators Using Dual-Mode Excitation" IEICE Trans.Fundamentals, Vol. E85-A, No. 2 February 2002. The circuit view is configured by an oscillation circuit 1, an oscillation circuit 2, a SC cut crystal oscillator Xtal, a serial connection circuit with a variable capacity diode Cv and the like. In the oscillation circuit 1, a resistance Re1 is connected between an emitter of a transistor Tr1 and a ground (GND), a resistance Rb1 is connected between a base and a ground of Tr1 and in addition, a serial connection circuit is connected between a capacitance C1 and a capacitance C2. Furthermore, a serial connection circuit between a crystal oscillator Xtal1 and a capacitance Ca1 is connected between a contact between the capacitance C1 and the capacitance C2. Resistances Rc1 and Ra1 are, respectively, connected between a power source Vcc and a collector of Tr1, and between the power source Vcc and a base of Tr1, whereby an output OUT1 is taken. A control voltage Vcnt is applied to the cathode of a variable-capacitance diode by grounding other end when a end of the serial connection circuit between the SC cut crystal oscillator Xtal and the variable-capacitance diode Cv is connected to the base of Tr1 through a capacitance Cil.

An oscillation circuit 2 is the same as a oscillation circuit 1 in the configuration and is configured in symmetrical to a serial connection circuit between a SC cut crystal oscillator Xtal and a variable-capacitance diode. In addition, since the resonance frequencies of the crystal oscillators Xtal1 and Xtal2, respectively, are set as frequencies of C mode and B mode, the crystal oscillator Xtall connected to an output OUT1 functions as a filter which passes only the oscillation frequency of C mode and the crystal oscillator Xta12 connected to an output OUT2 functions as a filter which passes the oscillation frequency of B mode by setting the oscillation circuit 1 as an oscillation circuit for C mode and the oscillation circuit 2 as an oscillation circuit for B mode.

## Claims

1. A SC cut crystal microbalance comprising:

   a SC cut crystal oscillator;
   a C mode/B mode switching-type oscillation circuit;
   a frequency counter; and
   a frequency information processing device, wherein,
   the C mode/B mode switching-type oscillation circuit is switched by a signal received from the frequency information processing device, the frequencies of C mode and B mode is measured respectively, variations by temperature change are compensated from frequency variations of C mode based upon temperature information by the frequency change of B mode, and whereby mass change is measured.

2. A SC cut crystal microbalance comprising:

   a SC cut crystal oscillator;
   a C-mode/B-mode dual mode-type oscillation circuit; and
   a frequency counter and frequency information processing device, wherein,
   the frequencies of C mode and B mode are measured by a signal received from the frequency information processing device respectively, variations by temperature change are compensated from frequency variations of C mode based upon temperature information by the frequency change of B mode, and whereby mass change is measured.

3. A SC cut crystal microbalance according to claim 1, wherein:

the C-mode/B-mode switching-type oscillation circuit is configured to take the output OUT through a capacitance C6 from a collector of Tr1, wherein,

a resistance R1 is connected between an emitter of a transistor and a ground;

a serial connection circuit is connected between capacitances C3 C4;

resistances R2 and R3 are connected between a power source Vcc and the collector of Tr1, and between the power source Vcc and a base of Tr1, respectively;

a resistance R4 is connected between the base of the transistor Tr1 and the ground;

a serial connection circuit is connected between capacitances C1 and C2;

an inductance L1 is connected to a contact of the capacitances C1 and C2, and a contact of the capacitances C3 and C4;

terminals on each side of capacitances C7 and C8 are connected to a contact of the capacitances C1 and C2;

terminals on each side are connected each switch SW;

terminal on a side is connected to a contact of the capacitances C3 and C4; and

a serial connection circuit between the SC cut crystal oscillator and a variable capacitance C5 is connected to the base of Tr1 and the ground.

# FIG. 1

REFERENCE FREQUENCY BY
ATOMIC OSCILLATION

```
        1        2                                    4
  ┌ ─ ─ ─ ┐  ┌──────────┐    ┌──────────┐    ┌──────────┐      MASS INFORMATION
  │       │  │ C-MODE/   │    │          │    │ FREQUENCY │  ──→    OUTPUT
  │       │  │ B-MODE    │──→│ FREQUENCY │──→│ INFORMATION│
  │       │  │ SWITCHING │    │ COUNTER  │    │ PROCESSING │      TEMPERATURE
  │       │  │           │    │          │    │  DEVICE   │  ──→  INFORMATION
  └ ─ ─ ─ ┘  └──────────┘    └──────────┘    └──────────┘         OUTPUT
      │                             │
      5                            3
```

SWITCHING SIGNAL

# FIG. 2

## FIG. 3

EP 1 679 506 A2

# FIG. 4

REFERENCE FREQUENCY BY ATOMIC OSCILLATION

1

6

8

C-MODE/ B-MODE DUAL-MODE OSCILLATION

FREQUENCY COUNTER

FREQUENCY INFORMATION PROCESSING DEVICE

MASS INFORMATION OUTPUT

TEMPERATURE INFORMATION OUTPUT

5

7

SWITCHING SIGNAL

# FIG. 5

OSCILLATION CIRCUIT 2

OSCILLATION CIRCUIT 1

Vcc

Rc2    Ra2    Ra1    Rc1

Tr2    Ci2    Ci1    Tr1

Xtal2  C3    Xtal    C1    Xtal1

OUT2   Ca2    Cv    C2    Ca1    OUT1

Re2    Rb2    Rb1    Re1

GND    GND

Vcnt

FIG. 6

St-Cut

$\theta \simeq 34°$

$\phi \simeq 22°$

FIG. 7

C-MODE    B-MODE    A-MODE

8 TO 9%

REACTANCE

FREQUENCY

FIG. 8

# FIG. 9

df/f=−29.6t+2516

x-axis: TEMPERATURE (°C)
y-axis: df/f (ppm)

EP 1 679 506 A2